# EUROPÄISCHE PATENTANMELDUNG

(11) **EP 3 651 266 A1**
(43) Veröffentlichungstag der Anmeldung: **13.05.2020**
(21) Anmeldenummer: 19206815.3
(22) Anmeldetag: 04.11.2019
(51) Int. Cl.: H01Q 1/02, H01Q 1/32, H01Q 1/42, H01Q 1/44, H01Q 1/12

(54) **ABDECKELEMENT**

(30) Priorität: 12.11.2018 DE 102018219294
(71) Anmelder: Magna Exteriors GmbH, 63877 Sailauf (DE)
(72) Erfinder: GÖTZELMANN, Johannes, 97237 Altertheim (DE)
(74) Vertreter: Rausch, Gabriele

(57) **Zusammenfassung**

Es wird ein Abdeckelement für ein Radom in einem Fahrzeug vorgechlagen, das eine zumindest teilweise metallisierte Folie (2) aufweist, die auf einer Vorderseite (4) mit einer Schicht aus einem ersten Kunststoff (10) überspritzt ist und auf einer Rückseite (8) mit einer Abdeckschicht aus einem zweiten Kunststoff (14) hinterspritzt ist, wobei auf der Rückseite (8) oder der Vorderseite (4) der zumindest teilweise metallisierten Folie (2) ein Heizelement (20) vorgesehen ist.

## Beschreibung

Die Erfindung betrifft ein Abdeckelement für eine Öffnung eines Fahrzeugs und ein Verfahren zum Herstellen eines Abdeckelements für eine Öffnung eines Fahrzeugs.

### Stand der Technik

In einer Karosserie bzw. Außenwandung eines Fahrzeugs sind regelmäßig funktionelle Elemente, wie bspw. Sensoren und dergleichen, anzuordnen. Zum Schutz dieser funktionellen Elemente sowie aus ästhetischen Gründen kann des Weiteren vorgesehen sein, derartige Öffnungen für die funktionellen Elemente mit geeigneten Abdeckelementen abzudecken oder zu verschließen.

Bei mit Radarwellen arbeitenden Sensoren sind Vorkehrungen zur Vermeidung von Vereisung im Winter zu treffen. Es muss sichergestellt sein, dass sich keine Eisschicht vor dem Abstrahlbereich des Sensors bilden kann, da sonst die Funktion des Sensors nicht mehr gegeben ist. Dazu ist es bekannt, die Sensorfläche mit einer Heizeinrichtung zu versehen.

Die DE 10 2011 107 216 A1 beschreibt ein Radom einer Sende- und Empfangseinrichtung für Radarwellen in einem Kraftfahrzeug. Eine Heizeinrichtung ist flächig zwischen einer Tragschicht und einer Deckschicht des Radoms angeordnet. Insbesondere ist die Heizeinrichtung als ein elektrisch leitender Anstrich ausgebildet.

In der Druckschrift DE 10 2004 050 501 B3 ist eine strahlungsdurchlässige Kunststoff-Abdeckung beschrieben. Diese ist für Öffnungen in Fahrzeug-Karosserien, insbesondere einem für elektromagnetische Strahlen wie Radarstrahlen durchlässigen Radom, das einen Körper aus durchsichtigem Kunststoff mit einer Außenfläche aufweist, vorgesehen. Durch die Außenfläche wird ein farblich kontrastierendes Muster einer Kühlerverkleidung oder eines Firmenemblems dargestellt. Dieses Firmenemblem ist auf einer der Außenfläche gegenüberliegenden Rückfläche des Körpers angebracht. Die Rückseite des durch Spritzen geformten transparenten Körpers ist flächig, insbesondere ganzflächig, jedoch unter Aussparung der für das Muster vorgesehenen Fläche mit einer Kunststoffmasse hinterspritzt. Außerdem ist ein Bereich des Musters nach dessen Anbringen eines Kunststoffkörpers durch Anspritzen eines Kunststoffmaterials mit dem von der Kunststoffmasse gebildeten Körper fest verbunden.

Aus der EP 1 902 902 B1 ist ein Abdeckelement für eine Öffnung eines Fahrzeugs bekannt, das eine zumindest teilweise metallisierte Folie aufweist, wobei die Folie eine Sandwichstruktur mit einer oberen und einer unteren Deckschicht, insbesondere einer oberen und einer unteren Kunststoffschicht, und einer dazwischen eingebetteten metallischen Schicht aufweist, wobei die Folie durch ihre Sandwichstruktur die metallische Schicht schützt, und wobei die zumindest teilweise metallisierte Folie auf einer Vorderseite mit einer Schicht aus einem ersten Kunststoff überspritzt ist und auf einer Rückseite mit einer Abdeckschicht aus einem zweiten Kunststoff hinterspritzt ist.

EP 1 646 266 A2 zeigt ein Karosserieteil für ein Kraftfahrzeug und eine Heizeinrichtung für das Karosserieteil, dass einem Radarsensor zugeordnet ist. Allerdings verwendet man hier als Heizeinrichtung eine polymere Heizfolie mit integrierten Leiterbahnen in Form von Mäandern. Die Heizfolie kann nach ihrer Herstellung am Stoßfänger des Fahrzeugs angebracht werden.

DE10 149 337 A1 beschreibt ein Bauteil für einen Sensor, das geheizt wird. Dabei werden Heizdrähte eingesetzt. Es handelt sich hier nicht um eine integrierte Lösung die in einem Stoßfänger oder einer Stoßleiste aus Kunststoff integriert ist, sowie nicht um eine Lösung, die eine flächige elektrische leitfähige Schicht verwendet.

Es ist Aufgabe der Erfindung, ein langlebiges Abdeckelement für eine Öffnung eines Fahrzeugs bereitzustellen, das einfach hergestellt werden kann und die kompletten Funktionen zur Abdeckung eines Radarsensors übernimmt.

### Zusammenfassung der Erfindung

Die Aufgabe wird gelöst mit einem Abdeckelement für ein Radom in einem Fahrzeug, das eine zumindest teilweise metallisierte Folie aufweist, die auf einer Vorderseite mit einer Schicht aus einem ersten Kunststoff überspritzt ist und auf einer Rückseite mit einer Abdeckschicht aus einem zweiten Kunststoff hinterspritzt ist, wobei auf der Rückseite oder der Vorderseite der zumindest teilweise metallisierten Folie ein Heizelement vorgesehen ist.

Durch die hochintegrative Lösung für ein Abdeckelement ist die Herstellung vereinfacht und vor allem die Montage optimiert.

Es ist vorteilhaft, dass die Folie eine Bedruckung aufweist und tiefgezogen ist.

Dabei ist eine bevorzugte Ausführungsform so, dass die Bedruckung entweder Farbe und/oder metallische Strukturen oder mindestens eine metallische Fläche beinhaltet. Damit lässt sich das Abdeckelement sowohl ästhetischen Anforderungen anpassen als an die Anforderung das Abdeckelement zu beheizen.

In einer weiteren bevorzugten Ausführung besteht das Abdeckelement aus einer Folie mit einer Sandwichstruktur mit einer oberen und einer unteren Deckschicht, insbesondere einer oberen und einer unteren Kunststoffschicht, und einer dazwischen eingebetteten metallischen Schicht, wobei die Folie durch ihre Sandwichstruktur die metallische Schicht schützt und mindestens eine der Kunststoffschichten ein metallisches Heizgitter oder eine metallische Flächenheizung aufweist.

In einer weiteren Ausführung ist das Abdeckelement, dadurch gekennzeichnet, dass das Heizelement beim Hinterspritzen der metallisierten Folie mit eingespritzt ist.

Die metallisierte Folie ist in einer Ausführung mit einer weiteren Folie, auf der sich Heizleitungen befinden, verklebt ist.

Es ist von Vorteil, wenn der erste Kunststoff auf der Vorderseite transparent ist.

Die Aufgabe wird gelöst durch ein Verfahren zum Herstellen eines Abdeckelements für eine Öffnung eines Fahrzeugs, bei dem eine Vorderseite einer zumindest teilweise metallisierten Folie mit einem ersten Kunststoff unter Verbundbildung überspritzt und eine Rückseite dieser Folie mit einem zweiten Kunststoff unter Verbundbildung hinterspritzt wird, wobei mindestens ein Heizelement mit umspritzt wird.

Es ist dabei von Vorteil, dass die Folie vor einem Überspritzen mit dem ersten Kunststoff und vor einem Hinterspritzen mit dem zweiten Kunststoff durch Auftragen von Farbe mit einem Muster bedruckt und zur Bereitstellung einer dreidimensionalen Struktur der Folie durch einen Tiefziehprozess verformt wird, wobei die Bedruckung mit Farbe und/oder mit einem metallischen Struktur oder Fläche erfolgt.

Das Heizelement wird vorteilhafterweise während des Umspritzens mit der Folie verbunden.

### Kurzbeschreibunq der Erfindung

Die Erfindung ist anhand von Ausführungsbeispielen in der Zeichnung schematisch dargestellt und wird im Folgenden unter Bezugnahme auf die Zeichnung ausführlich beschrieben.

Die Figuren werden zusammenhängend und übergreifend beschrieben, gleiche Bezugszeichen bezeichnen gleiche Bauteile.
Fig. 1 zeigt in schematischer Darstellung eine erste Ausführungsform eines erfindungsgemäßen Abdeckelements bei einer Ausführungsform eines Verfahrens zur Herstellung dieses Abdeckelements.
Fig. 2 zeigt das durch das in Fig. 1 dargestellte Verfahren hergestellte erfindungsgemäße Abdeckelement in einer Vorderansicht sowie in einer Schnittansicht.
Fig. 3 zeigt in schematischer Darstellung eine Variante zur Formung eines erfindungsgemäßen Abdeckelements.

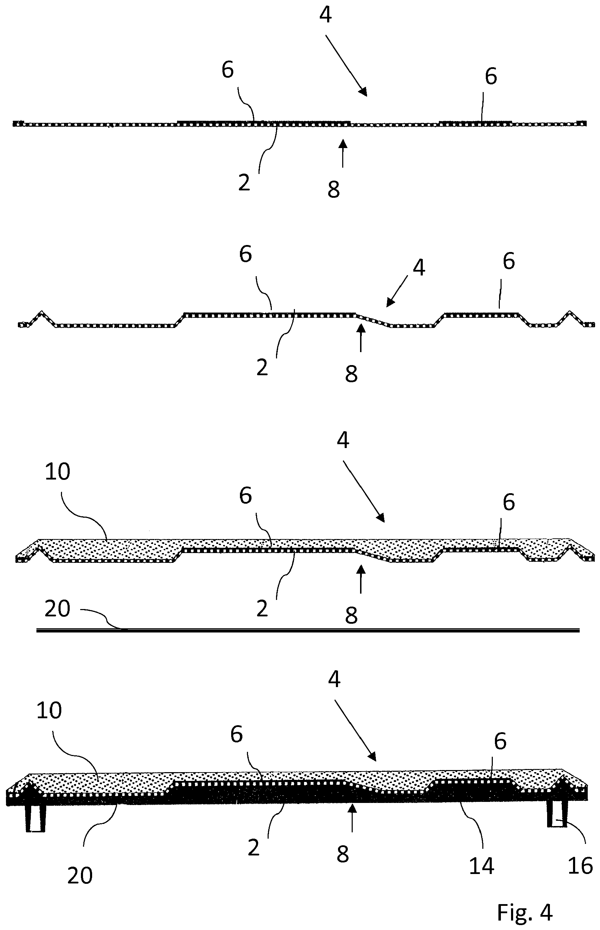

Fig. 4 zeigt eine alternative Ausführungsform.

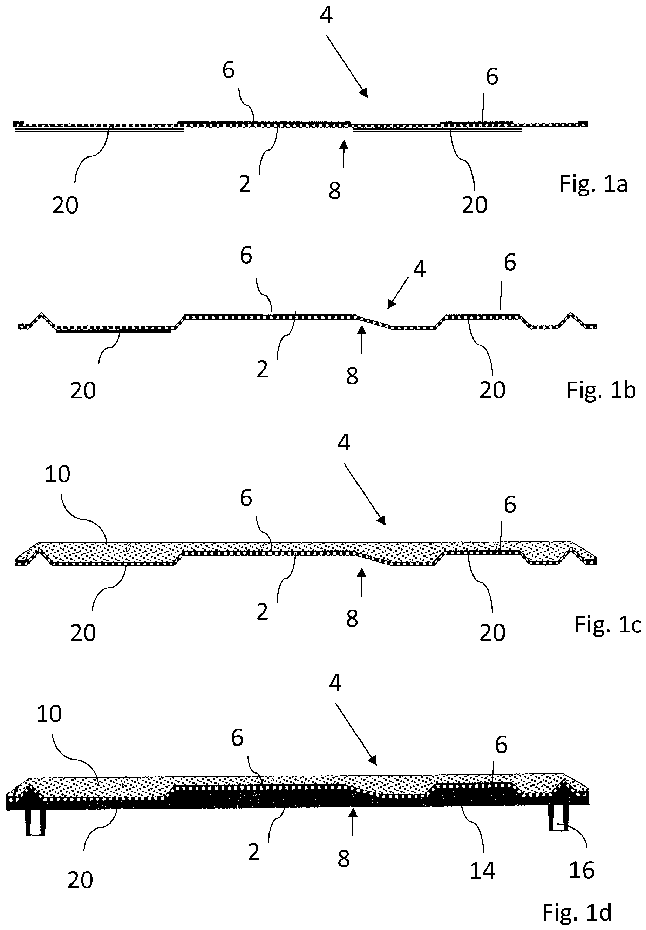

Die einzelnen Schritte zur Herstellung einer Ausführungsform des Abdeckelements nach einer Ausführungsform des Verfahrens sind in den Fig. 1a, Fig. 1b, Fig. 1c und Fig. 1d schematisch dargestellt.

Dabei zeigt Fig. 1a eine metallisierte Folie 2, die aus zwei Kunststoffschichten gebildet ist, zwischen denen zumindest teilweise eine metallische Schicht eingebettet ist.

In einer ersten Ausführungsform ist eine der Kunststoffschichten Träger von Heizleitungen. Diese sind entweder auf der Folie aufgedampft oder aufgedruckt. Die Heizleitungen sind dabei mäanderförmig aufgebracht, wobei die Abstände der einzelnen Leitungen so gewählt sind, dass das Radarsignal nicht gestört wird.

Alternativ wird einen der Kunststoffschichten als Träger für ein Heizelement 20 verwendet, das auf einer getrennten Folie aufgebracht sind.

Diese Heizfolie wird mit der metallisierten Folie 2 verbunden, im einfachsten Fall verklebt.

Alternativ zur Verwendung von Heizleitungen ist eine Verwendung von Heizflächen als Flächenheizung denkbar.

Eine Vorderseite 4 dieser metallisierten Folie 2 wird bei der Herstellung stellenweise mit Farbe 6 bedruckt, so dass auf der Vorderseite 4 insgesamt ein Muster bereitgestellt ist.

Aufgrund dieser Bedruckung mit der hier schwarzen Farbe 6 ist die sichtbare Vorderseite 4 demnach zumindest teilweise farblich gestaltet. Eine Rückseite 8 der Folie 2 bleibt in dieser Ausführungsform unbedruckt.

Das Bedrucken ist dabei in einer Ausführungsform rein gestalterisch zu sehen. Allerdings kann auch ein Heizelement 20 zusätzlich oder als einzige Bedruckung aufgedruckt werden.

Fig. 1b zeigt die bereits in Fig. 1a vorgestellte Anordnung, die die Folie 2 mit der aufgetragenen Farbe 6 und/oder dem Heizelement umfasst, nach Durchführung eines Tiefziehprozesses. Durch diesen Tiefziehprozess wird die Folie 2 derart verformt, dass sie im dargestellten Querschnitt nunmehr ein Profil oder Relief aufweist. In der vorliegenden Ausführungsform wird dabei berücksichtigt, dass einzelne Bereiche, auf denen die Farbe 6 auf der Folie 2 aufgetragen ist, durch erhabene Profilabschnitte in inneren Bereichen der Folie 2 sowie durch abgesenkte Profilabschnitte an Randbereichen der Folie 2 von benachbarten Bereichen begrenzt sind.

Für Abdeckelement, die im Tiefziehprozess stark umgeformt werden, ist gegebenenfalls das Bedrucken mit dem Heizelement dem Tiefziehprozess nachzuordnen. Dann erfolgt erst das Tiefziehen der Folie 2 und erst nach der dreidimensionalen Ausgestaltung das Bedrucken mit Heizleitern oder Heizfläche.

Fig. 1c zeigt die Anordnung nach einem Überspritzen der Vorderseite 4 der Folie 2 sowie der auf der Vorderseite 4 aufgetragenen Farbe 6 mit einer Schicht eines hier aus Polycarbonat gebildeten ersten transparenten Kunststoffs 10. Dieses Überspritzen wird derart durchgeführt, dass eine Oberfläche der Schicht aus dem ersten Kunststoff 10 besonders glatt und eben ist.

Fig. 1d zeigt in einer schematischen Schnittdarstellung eine erste Ausführungsform eines erfindungsgemäßen Abdeckelements 12, wie es nach einem letzten Schritt zur Herstellung bereitgestellt ist. In diesem letzten Schritt wird die Rückseite 8 der Folie 2 unter Bereitstellung einer Abdeckschicht, die in vorliegender Ausführungsform aus einem aus schwarzem Polycarbonat gebildeten zweiten Kunststoff 14 gebildet wird, hinterspritzt. Dabei werden in dieser aus dem schwarzen zweiten Kunststoff 14 bereitgestellten Abdeckschicht auf der Rückseite 8 der Folie 2 zusätzlich Befestigungselemente 16 integriert.

Bei diesem Herstellungsschritt kann in einer weiteren Ausführungsform nach Fig, 4 ein Heizelement integriert werden. Dabei kann eine Heizfolie als Heizelement 20 an der Innenseite der Folie 2 angelegt und mit umspritzt werden.

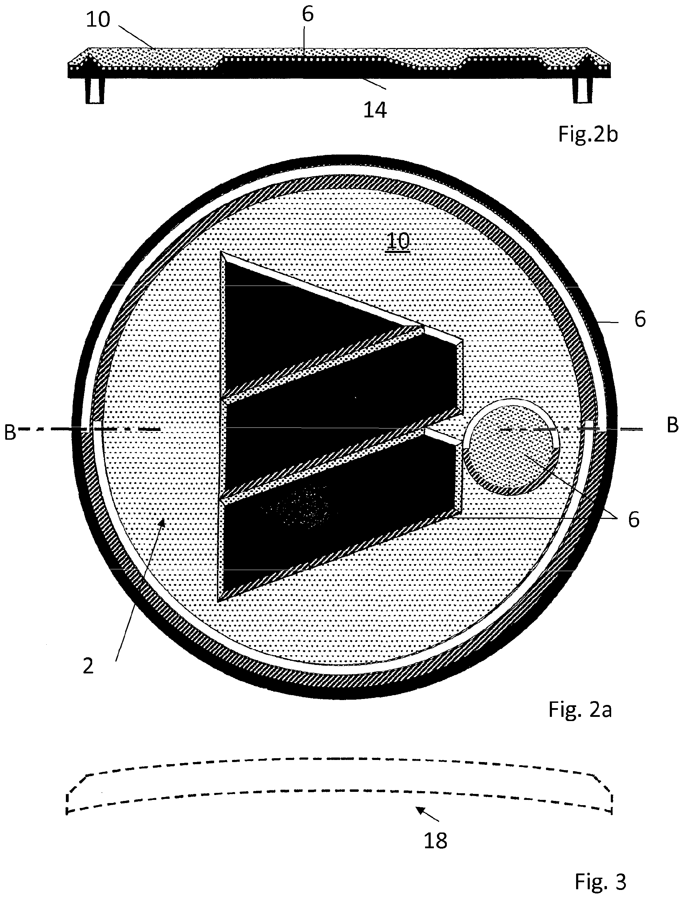

Fig. 2a zeigt das durch das anhand der Fig. 1 dargestellte Verfahren hergestellte Abdeckelement 12 in Draufsicht. Fig. 2b zeigt das Abdeckelement 12 entlang der Schnittlinie B-B aus der Fig. 2a, wobei diese Darstellung der Darstellung aus der Fig. 1d entspricht.

Diese nun vorliegende Ausführungsform des Abdeckelements 12 weist ein Emblem auf bzw. stellt aufgrund ihrer farblichen Musterung ein solches Emblem dar. Dieses Emblem ist durch die auf der Vorderseite 4 der Folie 2 aufgetragene Farbe 6 optisch hervorgehoben, wobei die Farbe 6 in Fig. 2b durch schwarze Bereiche sowie Bereiche dichter Punktung dargestellt ist. Unbedruckte Bereiche der Vorderseite 4 der Folie 2 weisen hier eine Punktung geringer Dichte auf. Die mit der Farbe 6 bedruckten Bereiche der Vorderseite 4 sowie die unbedruckten Bereiche der Vorderseite 4 der Folie 2 sind durch den auf der Vorderseite 4 aufgetragenen transparenten ersten Kunststoff 10 optisch gut erkennbar. Demnach ist die Vorderseite 4 der Folie 2 im vorliegenden Ausführungsbeispiel mit der hier schwarzen Farbe 6 unterschiedlich dicht bedruckt.

Fig. 3 zeigt in schematischer Darstellung eine zweite Ausführungsform eines Abdeckelements 18, das in diesem Fall gewölbt ist, aber dieselben hier nicht dargestellten Komponenten wie die in den Fig. 1 und Fig. 2 vorgestellte erste Ausführungsform des Abdeckelements 12 aufweist und auf einer Vorderseite ebenfalls ebenmäßig bzw. glatt ausgebildet ist.

Das Abdeckelement ist für eine Öffnung eines Fahrzeugs vorgesehen und weist eine zumindest teilweise metallisierte Folie auf, die auf einer Vorderseite mit einer Schicht aus einem ersten Kunststoff überspritzt ist und auf einer Rückseite mit einer Abdeckschicht aus einem zweiten Kunststoff hinterspritzt ist. Außerdem weist die Folie eine Sandwichstruktur mit einer oberen und einer unteren Deck- oder Schutzschicht, insbesondere Kunststoffschicht und/oder Lackschicht, und einer zwischen diesen beiden Deckschichten eingebetteten metallischen Schicht auf. Dabei ist vorgesehen, dass die Folie durch ihre Sandwichstruktur bzw. ihren Sandwichaufbau die metallische bzw. metallisierte Schicht schützt. Dieser Aufbau eignet sich zum Schutz einer weiteren Schicht oder einer weiteren Folie, die das Heizelement darstellt.

Dieses Abdeckelement ist zum Abdecken einer in der Öffnung anzuordnenden Radom vorgesehen.

Außerdem ist das Abdeckelement als Emblem für das Fahrzeug ausgebildet, wie es beispielsweise prominent im Zentrum eines Kühlergrills ausgebildet ist. Als Kunststoff zu einem Bespritzen bzw. zum Über- und/oder Hinterspritzen der Folie kann Polycarbonat (PC) vorgesehen sein. Dadurch, dass insbesondere Polycarbonat als zu verwendender Kunststoff für die beiden Schichten, also der Schicht auf der Oberseite sowie der Abdeckschicht, und bspw. Polycarbonat für die Folie vorgesehen ist, wird ein guter Verbund zwischen den einzelnen Schichten und der Folie bereitgestellt. Dabei ist insbesondere der zum Überspritzen der Vorderseite der Folie vorgesehene erste Kunststoff zumindest teilweise optisch transparent, so dass ein Muster, das durch die metallisierte Folie dargestellt ist, nach außen hin sichtbar ist.

In der Regel sind die Schicht auf der Vorderseite der Folie, die Abdeckschicht auf der Rückseite der Folie sowie die beiden Kunststoffschichten der Folie zur Bereitstellung eines Verbunds aus demselben Kunststoff gebildet oder basieren materiell auf demselben Kunststoff. Durch die Einbettung der metallischen Schicht wird diese in den nachfolgenden Verfahrenschritten, speziell dem Spritzgiessen, vor Beschädigung geschützt. Wegen der hierfür notwendigen Temperaturstabilität kommen daher beispielsweise Polycarbonat und auf Polycarbonat basierende Kunststoffe zum Einsatz. Auch kann eine geeignete Lackierung der metallisierten Seite der Folie die Anforderung erfüllen, wenn gleichzeitig eine gute Haftung zur Abdeckschicht erzielt wird.

Dabei können die beiden Kunststoffschichten der Folie insbesondere aus Polycarbonat gebildet sein. Die dünne metallische Schicht zwischen den Kunststoffschichten ist aus Metall, bspw. Chrom. Die Folie des Abdeckelements kann bspw. aus Makrofol<®> DPF 5072 der Bayer AG, gebildet sein.

Dadurch, dass der auf die Folie über- und unterzuspritzende Kunststoff sowie die beiden Kunststoffschichten der Folie aus Polycarbonat gebildet sind oder zumindest materiell darauf basieren, wird insgesamt ein weitgehend homogenes und einstückiges Abdeckelement bereitgestellt.

Die metallische Schicht der Folie weist eine Dicke von wenigen Mikrometern, etwa in einer Größenordnung von 2 Micrometern, auf. Die Dicke der metallischen Schicht ist so gewählt, dass sie für elektromagnetische Wellen transparent ist und gleichzeitig eine metallische Optik erzeugt.

Des Weiteren kann vorgesehen sein, dass in der Abdeckschicht des Abdeckelements auf der Rückseite mindestens ein Befestigungselement integriert ist. Mit diesem mindestens einen Befestigungselement ist es möglich, das Abdeckelement an der Öffnung einer Karosserie oder Außenwandung anzuordnen bzw. zu befestigen. Dabei kann auch vorgesehen sein, dass das Abdeckelement als ein Einsatz in der Öffnung vorgesehen ist.

Bei dem erfindungsgemäßen Verfahren zum Herstellen eines Abdeckelements für eine Öffnung eines Fahrzeugs wird eine Vorderseite einer zumindest teilweise metallisierten Folie, die eine Sandwichstruktur mit einer oberen und einer unteren Deckschicht aus Kunststoff und einer dazwischen eingebetteten metallischen Schicht aufweist, wobei die Folie durch ihre Sandwichstruktur die metallische Schicht schützt, mit einem ersten Kunststoff unter Verbundbildung überspritzt und eine Rückseite dieser Folie mit einem zweiten Kunststoff unter Verbundbildung hinterspritzt.

Des Weiteren kann die Folie vor einem Bespritzen, d.h. vor einem Überspritzen der Vorderseite und vor einem Hinterspritzen der Rückseite durch Auftragen einer geeigneten Farbe oder Druckfarbe, bspw. schwarzer Farbe, zumindest auf der Vorderseite der Folie mit einem Muster bedruckt werden. Zur Bereitstellung einer dreidimensionalen Struktur der Folie kann diese durch einen Tiefziehprozess oder durch ein Thermoumformen verformt werden.

Im Rahmen einer Herstellung des Abdeckelements kann die Folie als Rollenware bereitgestellt werden. Aus einer derartigen Rollenware können Folienstücke bereitgestellt werden, die für das Abdeckelement eine geeignete Größe aufweisen, und insbesondere durch Ausschneiden oder Ausstanzen hergestellt werden. Somit ist es möglich, auch vorgefertigte Dekorfolie als Rollenware zu verwenden und somit einen besonders günstigen Fertigungsprozess des Abdeckelements zu gewährleisten. Zudem kann auch vorgesehen sein, die Folie als metallisiertes Halbfertigteil bereitzustellen, wodurch ebenfalls Kosten für ein Herstellen des Abdeckelements reduziert werden können.

Außerdem ist regelmäßig vorgesehen, dass zumindest die Schicht für die Vorderseite der Folie zumindest mit dem ersten Kunststoff mittels einer In-Mould-Filmtechnik bespritzt wird. Die Rückseite der Folie wird des Weiteren unter Bereitstellung einer aus dem zweiten Kunststoff gebildeten Abdeckschicht, die als Formteil ausgebildet ist, hinterspritzt. Zusätzlich kann auf dem Abdeckelement nach einem Bespritzen, d.h. Über- und Hinterspritzen, eine Hartbeschichtung aufgetragen werden

Bei einer Variante zur Herstellung des Abdeckelements wird zwischen einzelnen Schichten, d.h. der Schicht aus dem ersten Kunststoff auf der Vorderseite und der Abdeckschicht aus dem zweiten Kunststoff und den entsprechenden Kunststoffschichten der Folie ein Verbund gebildet. Dies ist möglich, da sowohl die aufgespritzten Kunststoffschichten als auch die entsprechenden Kunststoffschichten der Folie aus demselben Kunststoff sind oder zumindest materiell auf demselben Kunststoff basieren. Durch einen derartigen Aufbau des Abdeckelements kann innerhalb des Abdeckelements eine Spaltbildung durch Temperaturwechsel vermieden werden kann. Der erste und der zweite Kunststoff sowie die Kunststoffschichten der Folie sind insbesondere aus Polycarbonat (PC). Alternativ ist auch eine Verwendung von PMMA oder weiteren transparenten Kunststoffen möglich.

Der erste und der zweite Kunststoff unterscheiden sich lediglich in ihrer Färbung voneinander, dabei ist der erste Kunststoff im optisch sichtbaren Bereich des elektromagnetischen Spektrums transparent und somit durchsichtig. Dem zweiten Kunststoff kann im Unterschied zu dem ersten Kunststoff ein opaquer, bspw. schwarzer, Farbstoff beigemischt sein, wobei die Farbe derart zu wählen ist, dass sich die beiden Kunststoffe bezüglich ihrer materiellen, in der Regel auch chemischen und/oder physikalischen Beschaffenheit bzw. Eigenschaften idealerweise nicht voneinander unterscheiden.

Durch den Materialverbund von Folie und Abdeckschichten wird eine Spaltbildung, wie sie bei ähnlichen aus dem Stand der Technik bekannten Abdeckelementen meist vorkommt, vermieden. Zudem wird eine von Teil zu Teil gleichbleibende, geringe Dämpfung der elektromagnetischen Strahlung erreicht. Durch Vermeiden der Spaltbildung ist des Weiteren ein Evakuieren und Abdichten eines bei der Herstellung des Abdeckelements geformten Hohlraums nicht mehr erforderlich.

Mit der Erfindung können somit ein Abdeckelement bzw. eine Abdeckung, die aus einem Verbund aus einem Kunststoff mit lediglich unterschiedlich gefärbten Schichten hergestellt ist, gebildet werden. Dieses Abdeckelement dient typischerweise als Einsatz oder Aufsatz für Öffnungen in Fahrzeugkarosserien und insbesondere in einem Kühlerschutzgitter, womit eine Vorrichtung zur Abstandsmessung mittels elektromagnetischer Strahlung, insbesondere ein Radarsensor, abzudecken ist. Durch die erfindungsgemäße Ausgestaltung des Abdeckelements ist gewährleistet, dass dieses zur Realisierung der Abstandsmessung für die elektromagnetische Strahlung hinreichend transparent und somit durchgängig ist.

Das Verfahren zur Herstellung des Abdeckelements bzw. Radoms ist in wenigen Fertigungsschritten durchführbar. Außerdem wird bei diesem Verfahren insgesamt ein Abdeckelement, das als integrales Bauteil ohne Spaltbildung ausgebildet ist, bereitgestellt.

Zum Herstellen des einteiligen Abdeckelements aus Kunststoff, die durchlässig für elektromagnetische Strahlen ist, wird in der Regel die dekorative metallisierte Folie mit beidseitiger Oberfläche aus Kunststoff, bspw. Makrofol<®> DPF 5072 der Bayer AG, bzw. mit einem ähnlichen Schutz der metallisierten Schicht, auf der Vorderseite mit einem transparenten ersten Kunststoff, insbesondere aus Polycarbonat, als Außenfläche überspritzt. Die Rückseite dieser Folie wird mit einer Abdeckschicht aus einem gefärbtem zweiten Kunststoff, insbesondere Polycarbonat, hinterspritzt.

Des Weiteren kann die dekorative Folie auf der Oberseite mit einem Muster aus Farbe oder Farbstoff bzw. Druckfarbe, bspw. von der Firma Proell, bedruckt werden, wobei dieses Muster in der Folie innenliegend eine metallisierte Fläche der Folie zumindest teilweise abdeckt.

Durch Verformen der teilweise bedruckten Folie wird eine dreidimensionale Form und somit ein Profil oder Relief für die Folie erzeugt, die in einem weiteren Schritt in einer In-Mould-Filmtechnik mit dem transparenten ersten Kunststoff überspritzt wird. Dabei geht die Vorderseite der Folie mit einem dabei aus dem ersten Kunststoff gebildeten transparenten Formteil einen Verbund ein. Dabei schützt die Deckschicht aus Kunststoff oder Lack die metallisierte Schicht im Inneren der Folie. In einem zusätzlichen Schritt wird das im ersten Schritt erzeugte dekorative Profil der Folie auf der unbedruckten Rückseite mit einem Formteil aus dem zweiten Kunststoff hinterspritzt. Dabei geht die Rückseite der Folie mit einem dabei durch Hinterspritzen hergestellten zweiten Formteil einen Verbund ein. Während des Spritzgießvorgangs schützt die Deckschicht aus Kunststoff die metallisierte Schicht im Inneren der Folie.

Mit einem derartigen Abdeckelement ist es möglich, eine Radarantenne für das Fahrzeug zu schützen. Derartige Radarantennen und somit zum Abdecken vorgesehene Abdeckelemente sind bspw. in einem Stoßfänger oder in einem Kühlerschutzgitter angeordnet.

Das Abdeckelement weist in der Regel eine gleichmäßige Dicke auf. Zudem ist das Abdeckelement derart hergestellt und/oder ausgebildet, dass die Schicht aus dem ersten Kunststoff auf der Vorderseite des Abdeckelements besonders glatt und eben, also frei von Unebenheiten ist.

Eine für das Abdeckelement vorgesehene Folie weist eine Dicke von 200 bis 400 Micrometer, insbesondere 375 Micrometer, auf, wobei die zwischen den Kunststoffschichten eingebettete Metallschicht eine Dicke von ca. 2 Micrometer aufweist und somit hinreichend dünn ist, um für elektromagnetische Wellen, die durch die Vorrichtung zum Abstandsmessen zu erfassen sind, durchlässig zu sein. Der Folie kann bspw. durch Thermoformen oder High Pressure Formen eine reliefartige Form gegeben werden. Außerdem kann auf dem Abdeckelement eine UVbeständige durchsichtige Schicht aus Harz auf einer Gegenseite der transparenten Schicht aufgetragen werden. Des Weiteren können innerhalb des Abdeckelements eine Heizfolie aus Silber-Tinte oder entsprechende Heizspiralen oder Heizfäden aufgedruckt sein. Die Abdeckschicht auf der Rückseite ist regelmäßig schwarz, so dass die Heizfolie auf dieser Abdeckschicht aufgeklebt werden kann. Des Weiteren ist vorgesehen, dass das Abdeckelement eine Dämpfung von weniger als 1,8 dB aufweist, so dass das Abdeckelement insbesondere für Radarstrahlen hinreichend durchgängig ist.

## Patentansprüche

1. Abdeckelement für ein Radom in einem Fahrzeug, das eine zumindest teilweise metallisierte Folie (2) aufweist, die auf einer Vorderseite (4) mit einer Schicht aus einem ersten Kunststoff (10) überspritzt ist und auf einer Rückseite (8) mit einer Abdeckschicht aus einem zweiten Kunststoff (14) hinterspritzt ist, wobei auf der Rückseite (8) oder der Vorderseite (4) der zumindest teilweise metallisierten Folie (2) ein Heizelement (20) vorgesehen ist.

2. Abdeckelement nach Anspruch 1, bei dem die Folie (2) eine Bedruckung aufweist und tiefgezogen ist.

3. Abdeckelement nach Anspruch 1 oder 2, **dadurch gekennzeichnet, dass** die Bedruckung entweder Farbe und/oder metallische Strukturen oder mindestens eine metallische Fläche beeinhaltet.

4. Abdeckelement nach Anspruch 3, **dadurch gekennzeichnet, dass** die metallischen Flächen oder Strukturen zur Ausgestaltung einer Heizung dienen.

5. Abdeckelement nach Anspruch 1 oder 2, **dadurch gekennzeichnet, dass** die Folie (2) eine Sandwichstruktur mit einer oberen und einer unteren Deckschicht, insbesondere einer oberen und einer unteren Kunststoffschicht, und einer dazwischen eingebetteten metallischen Schicht aufweist, wobei die Folie (2) durch ihre Sandwichstruktur die metallische Schicht schützt und mindestens eine der Kunststoffschicht ein metallisches Heizgitter oder eine metallische Flächenheizung aufweist.

6. Abdeckelement nach Anspruch 1 oder 2, **dadurch gekennzeichnet, dass** das Heizelement beim Hinterspritzen der metallisierten Folie (2) mit eingespritzt ist.

7. Abdeckelement nach Anspruch 1 oder 2, **dadurch gekennzeichnet, dass** die metallisierte Folie (2) mit einer weiteren Folie, auf der sich Heizleitungen befinden verklebt ist.

8. Abdeckelement nach einem der vorhergehenden Ansprüchen, das als Emblem für das Fahrzeug ausgebildet ist.

9. Abdeckelement nach einem der voranstehenden Ansprüche, bei dem der erste Kunststoff (10) auf der Vorderseite (4) transparent ist.

10. Abdeckelement nach einem der voranstehenden Ansprüche, bei dem in der Abdeckschicht auf der Rückseite (8) der Folie (2) Befestigungselemente (16) integriert sind.

11. Verfahren zum Herstellen eines Abdeckelements für eine Öffnung eines Fahrzeugs, bei dem eine Vorderseite (4) einer zumindest teilweise metallisierten Folie (2) mit einem ersten Kunststoff (10) unter Verbundbildung überspritzt und eine Rückseite dieser Folie (2) mit einem zweiten Kunststoff (14) unter Verbundbildung hinterspritzt wird, wobei mindestens ein Heizelement mit umspritzt wird.

12. Verfahren nach Anspruch 11, bei dem die Folie (2) vor einem Überspritzen mit dem ersten Kunststoff (10) und vor einem Hinterspritzen mit dem zweiten Kunststoff (14) durch Auftragen von Farbe (6) mit einem Muster bedruckt und zur Bereitstellung einer dreidimensionalen Struktur der Folie (2) durch einen Tiefziehprozess verformt wird, wobei die Bedruckung mit Farbe und/oder mit einem metallischen Struktur oder Fläche erfolgt.

13. Verfahren nach einem der Ansprüche 11 oder 12, bei dem die Folie (2) mit einer In-Mould-Filmtechnik bespritzt wird.

14. Verfahren nach Anspruch 11 bei dem ein Heizelement während des Umspritzens mit der Folie verbunden wird.

15. Verfahren nach einem der Ansprüche 11 bis 14, bei dem in der Abdeckschicht für die Rückseite (8) der Folie (2) Befestigungselemente (16) integriert werden.

## Geänderte Patentansprüche

### Geänderte Patentansprüche gemäss Regel 137(2) EPÜ.

1. Verfahren zum Herstellen eines Abdeckelements für eine Öffnung eines Fahrzeugs, bei dem eine Vorderseite (4) einer zumindest teilweise metallisierten Folie (2) mit einem ersten Kunststoff (10) unter Verbundbildung überspritzt und eine Rückseite dieser Folie (2) mit einem zweiten Kunststoff (14) unter Verbundbildung hinterspritzt wird, bei dem die Folie (2) vor einem Überspritzen mit dem ersten Kunststoff (10) und vor einem Hinterspritzen mit dem zweiten Kunststoff (14) durch Auftragen von Farbe (6) mit einem Muster bedruckt und zur Bereitstellung einer dreidimensionalen Struktur der Folie (2) durch einen Tiefziehprozess verformt wird, wobei die Bedruckung mit Farbe und/oder mit einem metallischen Struktur oder Fläche erfolgt, **dadurch gekennzeichnet dass** mindestens ein Heizelement (20) mit umspritzt und während des Umspritzens mit der Folie (2) verbunden wird.

2. Verfahren nach Anspruch 1 bei dem die Folie (2) mit einer In-Mould-Filmtechnik gespritzt wird.

3. Verfahren nach einem der Ansprüche 1 oder 2, bei dem in der Abdeckschicht für die Rückseite (8) der Folie (2) Befestigungselemente (16) integriert werden.

4. Abdeckelement für ein Radom in einem Fahrzeug, das eine zumindest teilweise metallisierte Folie (2) aufweist, die auf einer Vorderseite (4) mit einer Schicht aus einem ersten Kunststoff (10) überspritzt ist und auf einer Rückseite (8) mit einer Abdeckschicht aus einem zweiten Kunststoff (14) hinterspritzt ist, wobei auf der Rückseite (8) oder der Vorderseite (4) der zumindest teilweise metallisierten Folie (2) ein Heizelement (20) vorgesehen ist, **dadurch gekennzeichnet, dass** das Abdeckelement mit einem Verfahren nach einem der Ansprüche 1 bis 3 hergestellt ist.

5. Abdeckelement nach Anspruch 1, bei dem die Folie (2) eine Bedruckung aufweist und tiefgezogen ist.

6. Abdeckelement nach Anspruch 4 oder 5, **dadurch gekennzeichnet, dass** die Bedruckung entweder Farbe und/oder metallische Strukturen oder mindestens eine metallische Fläche beeinhaltet.

7. Abdeckelement nach Anspruch 6, **dadurch gekennzeichnet, dass** die metallischen Flächen oder Strukturen zur Ausgestaltung einer Heizung dienen.

8. Abdeckelement nach Anspruch 4 oder 5, **dadurch gekennzeichnet, dass** die Folie (2) eine Sandwichstruktur mit einer oberen und einer unteren Deckschicht, insbesondere einer oberen und einer unteren Kunststoffschicht, und einer dazwischen eingebetteten metallischen Schicht aufweist, wobei die Folie (2) durch ihre Sandwichstruktur die metallische Schicht schützt und mindestens eine der Kunststoffschicht ein metallisches Heizgitter oder eine metallische Flächenheizung aufweist.

9. Abdeckelement nach Anspruch 4 oder 5, **dadurch gekennzeichnet, dass** das Heizelement beim Hinterspritzen der metallisierten Folie (2) mit eingespritzt ist.

10. Abdeckelement nach einem der vorhergehenden Ansprüchen 4 bis 9, das als Emblem für das Fahrzeug ausgebildet ist.

11. Abdeckelement nach einem der voranstehenden Ansprüche 4 bis 10, bei dem der erste Kunststoff (10) auf der Vorderseite (4) transparent ist.

12. Abdeckelement nach einem der voranstehenden Ansprüche 4 bis 11, bei dem in der Abdeckschicht auf der Rückseite (8) der Folie (2) Befestigungselemente (16) integriert sind.
